# EUROPEAN PATENT APPLICATION

(11) **EP 4 729 754 A1**
(43) Date of publication of application: **22.04.2026**
(21) Application number: 25206510.7
(22) Date of filing: 02.10.2025
(51) Int. Cl.: F02C 3/22, B22F 10/62, B33Y 80/00, F02C 7/22, F02C 9/40, F23R 3/28, F23R 3/36

(54) **HYDROGEN NOZZLE WITH MULTIPLE FLOW CIRCUITS**

(30) Priority: 04.10.2024 US 202463703511 P
(71) Applicant: PRATT & WHITNEY CANADA CORP., Longueuil, Québec J4G 1A1 (CA)
(72) Inventor: AGOPIAN, Luca, (01BE5) Longueuil, J4G 1A1 (CA); POULIN, Jean-Rene, (01BE5) Longueuil, J4G 1A1 (CA); FAGNAN, Mathieu, (01BE5) Longueuil, J4G 1A1 (CA)
(74) Representative: Dehns

(57) **Abstract**

A hydrogen fuel nozzle (100) for a gas turbine engine includes a plurality of flow circuits (110, 120, 130), each of which is configured to flow one of a fuel or an oxidizer to a gas turbine engine combustor positioned downstream of the hydrogen fuel nozzle (100) when the gas turbine engine is assembled. At least one of the plurality of flow circuits (110, 120, 130) is a hydrogen flow circuit configured to flow hydrogen to the gas turbine engine combustor. The hydrogen fuel nozzle (100) is formed using an additive manufacturing (AM) technique from a hydrogen-compatible alloy and wherein an inside diameter of the hydrogen flow circuit has a surface finish selected to limit hydrogen embrittlement.

## Description

### BACKGROUND

The present disclosure relates generally to a hydrogen fuel nozzle for a gas turbine engine and, more particularly, to a hydrogen fuel nozzle made for a gas turbine engine with additive manufacturing (AM) techniques.

The use of hydrogen as an alternative fuel for aircraft engines has gained attention in recent years due to an increased demand for sustainable fuels. Incorporating hydrogen as an aircraft engine fuel in a feasible manner brings certain challenges. One of these challenges is leakage that may occur in traditional jointed components due to the small size of hydrogen molecules. Hydrogen molecules that may leak into connected joints can cause hydrogen embrittlement and premature combustion. Further, hydrogen embrittlement can occur in metal parts is in contact with hydrogen molecules, such as fuel nozzles or fuel injectors, regardless of leakage.

### SUMMARY

One aspect of this disclosure is directed to a hydrogen fuel nozzle for a gas turbine engine having a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is formed using an additive manufacturing (AM) technique from a hydrogen-compatible alloy and wherein an inside diameter of the hydrogen flow circuit has a surface finish selected to limit hydrogen embrittlement.

Another aspect of the disclosure is directed to a method of making a hydrogen fuel nozzle for a gas turbine engine. A hydrogen fuel nozzle is integrally formed from a hydrogen-compatible alloy using a continuous AM technique. The hydrogen fuel nozzle has a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is post-processed to remove support structures formed in the hydrogen fuel nozzle during the AM process. A surface finishing operation is performed on the hydrogen flow circuit to provide an inside diameter of the hydrogen flow circuit with a surface finish selected to limit hydrogen embrittlement.

Features of embodiments are set forth in the dependent claims.

### BRIEF DESCRIPTION OF THE DRAWINGS

Fig. 1A is a schematic view of a hydrogen fuel nozzle for a gas turbine engine positioned on a powder bed fusion (PBF) additive manufacturing (AM) build plate.
Fig. 1B is another schematic view of a hydrogen fuel nozzle for a gas turbine engine positioned on a powder bed fusion (PBF) additive manufacturing (AM) build plate.
Fig. 2 is a flow chart of a method for building a hydrogen fuel nozzle for a gas turbine engine.
Fig. 3A is a schematic view of a hydrogen flow passage with a rough ("as built") internal diameter surface.
Fig. 3B is a schematic view of a hydrogen flow passage after a surface finishing operation to smooth the internal diameter surface.
Fig. 4A is a schematic view of an optional configuration for a hydrogen fuel nozzle of the present disclosure.
Fig. 4B is a schematic view of another optional configuration for a hydrogen fuel nozzle of the present disclosure.
Fig. 4C is a schematic view of yet another optional configuration for a hydrogen fuel nozzle of the present disclosure.

### DETAILED DESCRIPTION

As discussed, because hydrogen is under consideration as a fuel for aircraft engines, certain challenges must be addressed. These challenges include hydrogen embrittlement and hydrogen leakage across connected joints. One approach to addressing hydrogen leakage across connected joints is to use jointless manufacturing techniques, including additive manufacturing (AM) techniques. AM techniques can reduce or eliminate the need for connected joints with good engineering design approaches and effective use of AM techniques. Further, AM techniques can be used to form complicated geometrical features that may be desirable for a hydrogen fuel nozzle, such as various swirling or fuel premixing features.

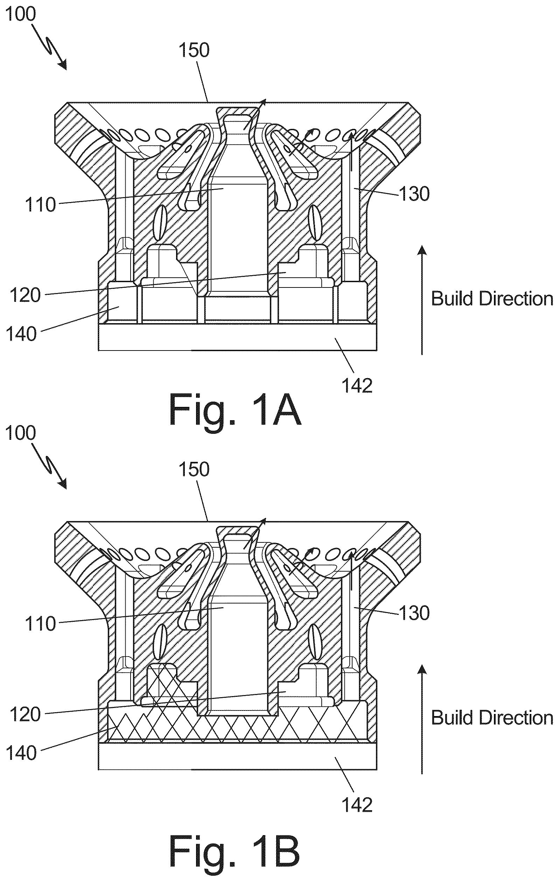

Figs. 1A and 1B are schematics of a hydrogen fuel nozzle **100** that includes a plurality of flow circuits, each of which is configured to flow one of a fuel or an oxidizer (e.g., air) to a gas turbine engine combustor (not shown) positioned downstream of the hydrogen fuel nozzle **100** when the gas turbine engine is assembled. As discussed further below, at least one of the plurality of flow circuits is configured to flow hydrogen to the gas turbine engine combustor. For example, the hydrogen fuel nozzle **100** of Figs. 1A and 1B include a primary flow circuit **110,** a secondary flow circuit **120,** and a tertiary flow circuit **130.** A person of ordinary skill will recognize the hydrogen fuel nozzle **100** may include more then or fewer than three flow circuits **110, 120, 130.** Figs. 1A and 1B also show a plurality of support structures **140** formed adjacent to a AM manufacturing system build plate **142.** Fig. 1A shows the plurality of support structures **140** as formed during the AM build process. Fig. 1B shows with overlaid "X"'s, which of the plurality of support structures **140** are removed in a post AM build processing operation. In some examples, all of the flow circuits can be directed to hydrogen. In other examples, at least one of the flow circuits can be directed to hydrogen with the remaining flow circuits being directed to air. In yet other examples, one of the flow circuits can be directed to a liquid hydrocarbon fuel (e.g., Jet A, a sustainable aviation fuel equivalent to Jet A, or another liquid hydrocarbon fuel), another of the flow circuits can be directed to air, and another of the flow circuits can be directed to hydrogen. In the examples of Figs. 1A and 1B, the primary flow circuit **110** can be directed to a liquid hydrocarbon fuel, the secondary flow circuit **120** can be directed to air, and the tertiary flow circuit **130** can be directed to hydrogen. The assignment of liquid fuel, air, and hydrogen to a particular flow circuit can be selected based on whatever arrangement is deemed appropriate for a particular application. For some applications such as the hydrogen fuel nozzle **100,** hydrogen can be provided as a pressurized gas so that it mixes well with liquid fuel and air streams. In other applications, hydrogen can be provided as a liquid.

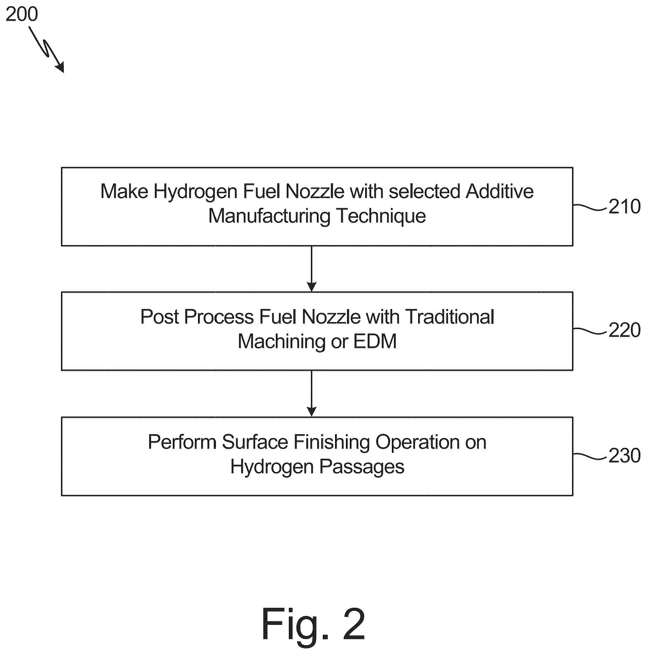

Fig. 2 is a flow chart of an overall process **200** for building a hydrogen fuel nozzle **100** of this disclosure. At step **210,** a selected AM technique is used to make the hydrogen fuel nozzle **100.** The AM technique can be any AM technique deemed suitable for a particular hydrogen fuel nozzle **100.** For example, the selected AM technique can be Powder Bed Fusion, e.g., Laser Powder Bed Fusion (PBF-LB) or Electron Beam Powder Bed Fusion (PBF-EB), Binder Jetting, Metal Extrusion (MEX), or any other AM technique deemed suitable for a particular hydrogen fuel nozzle **100.** The considerations that can be used to select a particular the AM technique for making the hydrogen fuel nozzle 100 can include, but are not limited, the material from which the fuel nozzle **100** will be made, the specific details of the hydrogen fuel nozzle **100** that will be made with AM techniques, and the surface finish produced by the selected AM technique.

Because of the challenges associated with hydrogen embrittlement, the hydrogen fuel nozzle **100** should be made with a hydrogen-compatible alloy designed to limit the impact of hydrogen embrittlement. Examples of such materials include Inconel^{®} 600 nickel-chromium-iron superalloy, Inconel^{®} 625 nickel-chromium superalloy, NASA HR-1 iron-nickel superalloy, and similar alloys. For use with a PBF AM technique, the material should be provided in powder form, with a powder meeting the specifications associated with the PBF AM technique.

At step **220,** the hydrogen fuel nozzle **100** made with the selected AM technique of step 210 can be subjected to one or more selected post-processing steps depending on the selected AM technique. For example, the one or more selected post-processing steps may be used to remove support structures **140** at the bottom of the build plate **142** used to create features that may not be possible with selected AM technique, or used for any other purpose deemed appropriate for a particular hydrogen nozzle **100.** Examples of suitable post-processing steps include mechanical machining (e.g., grinding, cutting, drilling, milling, etc.), chemical processing (e.g., chemical material removal processes, coating processes, etc.), electro-discharge machining (EDM), or other post-processing methods. In one example, an EDM post-processing step can be used to create features that may not be possible with current AM techniques.

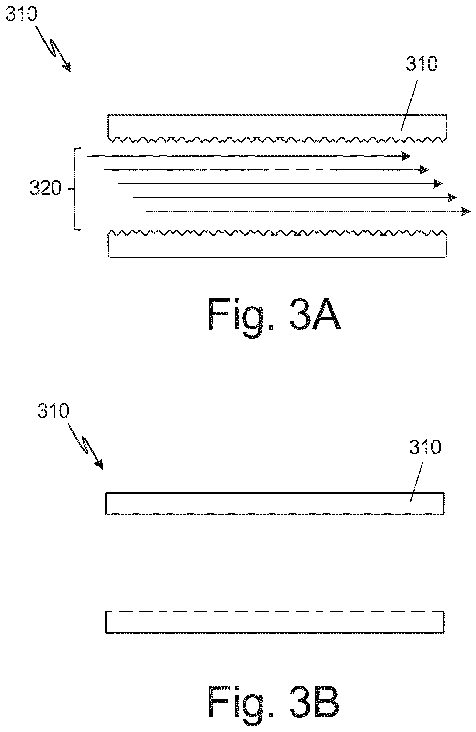

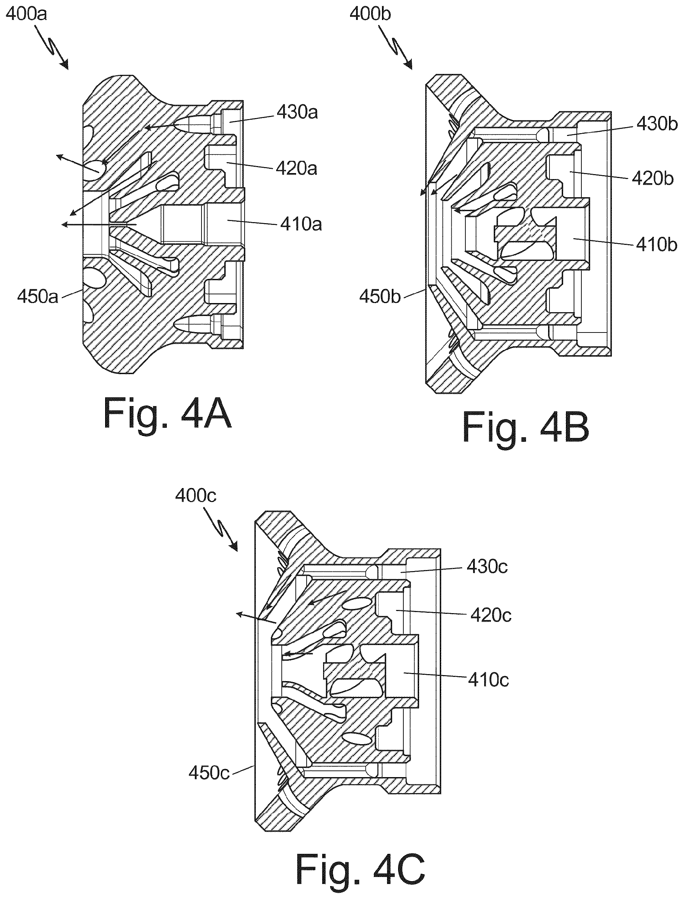

At step **230,** selected passageways in one of the plurality of flow circuits **110, 120, 130** in hydrogen fuel nozzle **100,** particularly passageways that are configured for hydrogen flow, are polished to achieve a desired surface finish. Exemplary polishing processes include chemical milling, chemical/mechanical etching, a selected electrochemical process or any other suitable polishing process may be used to produce a desired surface finish. Figs. 3A and 3B show such a polish process schematically, with Fig. 3A showing a selected hydrogen flow passage **310** having an inside diameter (ID) surface **320** with a rough ("as built") surface finish. Fig. 3A also shows selected chemical finishing reagent **330** flowed through the ID surface **320.** The chemical reagent **330** is selected to perform a chemical milling operation on ID surface **320** to produce a desired smoother surface finish. Fig. 3B shows that the same selected hydrogen flow passage **310** after the chemical milling step has an ID surface **320** with a smooth surface finish selected to limit hydrogen embrittlement. Providing an ID surface **320** a smooth surface finish reduces hydrogen embrittlement by reducing the surface area available for direct hydrogen contact and removing fissures and pores in which hydrogen can accumulate. Achieving the desired smoother surface finish for ID surface **320** may require plugging some flow circuit **110, 120, 130** holes as discussed further below to limit the chemical milling operation to selected holeways (see Figs. 4A-4C).

While the desired specific improvement in ID surface **320** surface finish can vary from application to application, the overall goal of step **230** is to reduce the roughness of the ID surface **320** to form a much smoother surface finish then available by AM techniques only. For example, depending on the specific application, it may be desirable to achieve an average surface roughness of less than 20 µm for a particular ID surface **320.** In other applications, particularly applications that will involve extensive use of hydrogen fuel, it may be desirable to achieve an average surface roughness of less than 5 µm or even less than 3 µm for ID surface **320** used in a hydrogen fuel flow circuit.

Suitable chemical milling reagents can include hydrochloric acid (HCl), nitric acid (HNO₃), other chemical milling reagents, and mixtures of chemical milling reagents including dilutions of chemical milling reagents with an alcohol such as ethanol or another alcohol. Other reagents are also possible depending on the material used to build the hydrogen fuel nozzle **100.** In some examples, polish techniques other than chemical milling can be used to improve the surface finish of ID surface **320.** For example, mechanical milling or other mechanical, electrical, or chemical methods can be used to improve the surface finish of ID surface **320.**

Figs. 4A-4C show various options for a hydrogen fuel nozzle **400a, 400b, 400c** of this disclosure. These options may include one or more of:
- Different hydrogen passage sizes leading to provide different hydrogen velocities from one or more of the flow channels 410, 420, 430. Such a configuration can contribute to controlling flame penetration, pre-mixing, and flame detachment from the hydrogen nozzle tip 450.
- The hydrogen fuel passages can be oriented in different combinations of co-flow, straight thru, or cross flow designs (See Fig. 4B).
- The hydrogen fuel passages can have the exit orifices as discrete passages such as holes, slots, or an annulus (Compare Figs. 1A/1B with 4A/4B/4C).
- The hydrogen fuel passage exit orifices can have co-swirl and counter swirl orientation that can be alternated or maintained the same for all circuits to have better mixing when hydrogen flows through more than one fuel circuit depending on the flow regime.
- The hydrogen fuel channel can have the same or different exit planes as the air in the air flow channel. (See Fig. 4C)
- The hydrogen fuel channels can feed into a common exit passage. (See Fig. 4B)

The disclosed hydrogen fuel nozzles address many of the challenges associated with using hydrogen as a fuel for aircraft engines. These include use of AM techniques to reduce or eliminate the need for connected joints and the use of hydrogen-compatible alloys that are less susceptible to hydrogen embrittlement.

### DISCUSSION OF POSSIBLE EMBODIMENTS

The following are non-exclusive descriptions of possible embodiments of the present invention.

A hydrogen fuel nozzle for a gas turbine engine includes a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is formed using an additive manufacturing (AM) technique from a hydrogen-compatible alloy and wherein an inside diameter of the hydrogen flow circuit has a surface finish selected to limit hydrogen embrittlement.

The component protection casing of the preceding paragraph can optionally include, additionally and/or alternatively, any one or more of the following features, configurations and/or additional elements:
The AM technique is one of laser powder bed fusion, electron beam powder bed fusion, binder jetting, and metal extrusion.

The hydrogen-compatible alloy is one of Inconel^{®} 600 nickel-chromium-iron superalloy, Inconel^{®} 625 nickel-chromium superalloy, NASA HR-1 iron-nickel superalloy.

The desired surface finish of the inside diameter of the hydrogen flow circuit is established with a chemical milling process using a selected chemical reagent.

The selected reagent is one of hydrochloric acid (HCl), nitric acid (HNO3), and ferric chloride (FeCl₃)(H₂O)ₓ).

The inside diameter of the hydrogen flow circuit has an average surface roughness of less than 20 µm after chemical milling.

The inside diameter of the hydrogen flow circuit has an average surface roughness of less than 5 µm after chemical milling.

The hydrogen fuel nozzle has three flow circuits.

A primary flow circuit is configured to flow a liquid hydrocarbon fuel to the gas turbine engine combustor, a secondary flow circuit is configured to flow an oxidizer to the gas turbine engine combustor, and a tertiary flow circuit is configured to flow hydrogen to the gas turbine engine combustor.

A method of making a hydrogen fuel nozzle for a gas turbine engine includes integrally forming a hydrogen fuel nozzle from a hydrogen-compatible alloy using a continuous AM technique. The hydrogen fuel nozzle has a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is post-processed to remove support structures formed in the hydrogen fuel nozzle during the AM process. A surface finishing operation is performed on the hydrogen flow circuit to provide an inside diameter of the hydrogen flow circuit with a surface finish selected to limit hydrogen embrittlement.

The method of the preceding paragraph can optionally include, additionally and/or alternatively, any one or more of the following features, configurations and/or additional elements:
The AM technique is one of laser powder bed fusion, electron beam powder bed fusion, binder jetting, and metal extrusion.

The hydrogen-compatible alloy is one of Inconel^{®} 600 nickel-chromium-iron superalloy, Inconel^{®} 625 nickel-chromium superalloy, NASA HR-1 iron-nickel superalloy.

The surface finishing operation is a chemical milling process using a selected chemical reagent.

The selected reagent is one of hydrochloric acid (HCl), nitric acid (HNO3), and ferric chloride (FeCl₃)(H₂O)ₓ).

The inside diameter of the hydrogen flow circuit has an average surface roughness of less than 20 µm after the surface finishing operation.

The inside diameter of the hydrogen flow circuit has an average surface roughness of less than 5 µm after the surface finishing operation.

The hydrogen fuel nozzle is formed with three flow circuits.

A primary flow circuit is configured to flow a liquid hydrocarbon fuel to the gas turbine engine combustor, a secondary flow circuit is configured to flow an oxidizer to the gas turbine engine combustor, and a tertiary flow circuit is configured to flow hydrogen to the gas turbine engine combustor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hydrogen fuel nozzle (100; 400a; 400b; 400c) for a gas turbine engine comprising:
a plurality of flow circuits (110, 120, 130; 310; 410, 420, 430), each of which is configured to flow one of a fuel or an oxidizer to a gas turbine engine combustor positioned downstream of the hydrogen fuel nozzle (100...400c) when the gas turbine engine is assembled, wherein at least one of the plurality of flow circuits (110...430) is a hydrogen flow circuit (310) configured to flow hydrogen to the gas turbine engine combustor;
wherein the hydrogen fuel nozzle (100...400c) is formed using an additive manufacturing (AM) technique from a hydrogen-compatible alloy and wherein an inside diameter (320) of the hydrogen flow circuit (310) has a surface finish selected to limit hydrogen embrittlement.

2. The hydrogen fuel nozzle of claim 1, wherein the desired surface finish of the inside diameter (320) of the hydrogen flow circuit (310) is established with a chemical milling process using a selected chemical reagent.

3. The hydrogen fuel nozzle of claim 2, wherein the inside diameter (320) of the hydrogen flow circuit (310) has an average surface roughness of less than 20 µm after chemical milling.

4. The hydrogen fuel nozzle of claim 3, wherein the inside diameter of the hydrogen flow circuit (310) has an average surface roughness of less than 5 µm after chemical milling.

5. The hydrogen fuel nozzle of any preceding claim having three flow circuits (110, 120, 130; 410, 420, 430).

6. A method of making a hydrogen fuel nozzle for a gas turbine engine comprising:
integrally forming, using a continuous additive manufacturing (AM) technique, a hydrogen fuel nozzle (100...400c) from a hydrogen-compatible alloy, wherein the hydrogen fuel nozzle (100...400c) has a plurality of flow circuits (110...430), wherein each of the plurality of flow circuits (110...430) is configured to flow one of a fuel or an oxidizer to a gas turbine engine combustor positioned downstream of the hydrogen fuel nozzle (100...400c) when the gas turbine engine is assembled, and wherein at least one of the plurality of flow circuits (110...430) is a hydrogen flow circuit (110...430) configured to flow hydrogen to the gas turbine engine combustor;
post-processing the hydrogen fuel nozzle (100...400c) to remove support structures (140) formed in the hydrogen fuel nozzle (100...400c) during the AM process; and
performing a surface finishing operation on the hydrogen flow circuit (310) to provide an inside diameter (320) of the hydrogen flow circuit (310) with a surface finish selected to limit hydrogen embrittlement.

7. The hydrogen fuel nozzle of any of claims 1 to 5 or method of claim 6, wherein the AM technique is one of laser powder bed fusion, electron beam powder bed fusion, binder jetting, and metal extrusion.

8. The hydrogen fuel nozzle or method of claim 7, wherein the AM technique is laser powder bed fusion.

9. The hydrogen fuel nozzle or method of any preceding claim, wherein the hydrogen-compatible alloy is one of Inconel^{®} 600 nickel-chromium-iron superalloy, Inconel^{®} 625 nickel-chromium superalloy, NASA HR-1 iron-nickel superalloy.

10. The method of any of claims 6 to 9, wherein the surface finishing operation is a chemical milling process using a selected chemical reagent.

11. The hydrogen fuel nozzle of claims 2 to 4 or claim 5 as dependent on claim 2 or method of claim 10, wherein the selected chemical reagent is one of hydrochloric acid (HCl), nitric acid (HNO₃), and ferric chloride (FeCl₃(H₂O)ₓ).

12. The method of claim 10 or 11, wherein the inside diameter (320) of the hydrogen flow circuit (310) has an average surface roughness of less than 20 µm after the surface finishing operation.

13. The method of claim 12, wherein the inside diameter (320) of the hydrogen flow circuit (310) has an average surface roughness of less than 5 µm after the surface finishing operation.

14. The method of any of claims 6 to 13, wherein the hydrogen fuel nozzle (100...400c) is formed with three flow circuits (110, 120, 130; 410, 420, 430).

15. The hydrogen fuel nozzle of claim 5 or the method of claim 14, wherein a primary flow circuit (110; 410) is configured to flow a liquid hydrocarbon fuel to the gas turbine engine combustor, a secondary flow circuit (120; 420) is configured to flow an oxidizer to the gas turbine engine combustor, and a tertiary flow circuit (130; 430) is configured to flow hydrogen to the gas turbine engine combustor.
